# EUROPÄISCHE PATENTANMELDUNG

(11) **EP 1 232 785 A2**
(43) Veröffentlichungstag der Anmeldung: **21.08.2002**
(21) Anmeldenummer: 02002659.7
(22) Anmeldetag: 06.02.2002
(51) Int. Cl.: B01J 19/00

(54) **Chip-Reaktor**

(30) Priorität: 15.02.2001 DE 10106952
(71) Anmelder: Cognis Deutschland GmbH & Co. KG, 40589 Düsseldorf (DE)
(72) Erfinder: Zech, Torsten, 09130 Chemnitz (DE); Hoenicke, Dieter, Prof. Dr., 76227 Karlsruhe (DE)

(57) **Zusammenfassung**

Vorgeschlagen wird ein Chip-Reaktor bestehend aus einem Träger mit mindestens zwei in ihrer Ausführungsform unterschiedlichen Mikroreaktionssystemen ("Kanälen"), die jeweils mindestens einem Mikroreaktionsraum, mindestens einen Zulauf für die Edukte und mindestens einen Ablauf für die Produkte aufweisen, und dabei unabhängig voneinander betrieben oder genutzt werden können.

## Beschreibung

### Gebiet der Erfindung

Die Erfindung befindet sich auf dem Gebiet der Mikroreaktionsbauteile und betrifft einen neuen Chipreaktor im Mikroformat zur raschen Ermittlung geeigneter geometrischer Parameter bzw. Ausführungsformen eines Mikroreaktors sowie geeigneter Reaktionsbedingungen für die Durchführung von Reaktionen im Mikromaßstab.

### Stand der Technik

Unter dem Begriff Mikrostrukturreaktor sind dem Fachmann Mikrostrukturapparate für chemische Prozesse geläufig, deren Kennzeichen es ist, dass mindestens eine der drei Raumdimensionen des Reaktionsraumes eine Abmessung im Bereich von 1 bis 2000 µm aufweist und die sich damit durch eine hohe übertragungsspezifische innere Oberfläche, kurze Verweilzeiten der Reaktanden und hohe spezifische Wärme- und Stofftransportleistungen auszeichnen. Beispielhaft sei auf die europäische Patentanmeldung **EP 0903174 A1** (Bayer) verwiesen, in der die Flüssigphasenoxidation organischer Verbindungen in einem Mikroreaktor bestehend aus einer Schar von parallelen Reaktionskanälen beschrieben wird. Mikroreaktoren können dabei zusätzlich mikroelektronische Komponenten als integrale Bestandteile enthalten. Im Unterschied zu bekannten mikroanalytischen Systemen besteht bei den Mikroreaktoren keineswegs die Notwendigkeit, dass alle lateralen Dimensionen des Reaktionsraumes im µm-Bereich liegen. Vielmehr werden dessen Abmessungen ausschließlich durch die Art der Reaktion bestimmt. Dementsprechend kommen für bestimmte Reaktionen auch solche Mikroreaktoren in Frage, bei denen eine gewisse Zahl von Mikrokanälen gebündelt werden, so dass Mikro- und Makrokanäle bzw. paralleler Betrieb einer Vielzahl von Mikrokanälen nebeneinander vorliegen können. Vorzugsweise sind die Kanäle parallel zueinander angeordnet, um einen hohen Durchsatz zu ermöglichen und den Druckverlust so gering wie möglich zu halten.

Mikroreaktoren können ganz unterschiedliche Ausführungsformen aufweisen, d.h. sich in der geometrischen Anordnung der Reaktionsräume, deren geometrischer Abmessungen sowie der Art weitere Funktionselemente, z.B. statischer Mischer, unterscheiden. Dem Fachmann ist selbstverständlich klar, dass die Ausführungsform des Mikroreaktors einen unmittelbaren Einfluss auf Ausbeute und Selektivität der Reaktion besitzt. Um aber die geeignetste Ausführungsform für jede Reaktion zu ermitteln, besteht bislang nur die Möglichkeit, jeden einzelnen der bekannten, jeweils einzeln vorliegenden Mikroreaktoren zu testen, was freilich mit einem hohen Zeitaufwand verbunden ist.

Die Aufgabe der vorliegenden Erfindung hat daher darin bestanden, diesem Umstand abzuhelfen und ein Bauteil zur Verfügung zu stellen, mit dessen Hilfe die optimale Ausführungsform eines Mikroreaktors sowie geeignete Reaktionsbedingungen in kürzester Zeit und mit geringstem technischen Aufwand ermittelt werden können.

### Beschreibung der Erfindung

Gegenstand der Erfindung ist ein Chip-Reaktor, bestehend aus einem Träger mit mindestens zwei in ihrer Ausführungsform unterschiedlichen Mikroreaktionssystemen ("Kanälen"), die jeweils mindestens einem Mikroreaktionsraum, mindestens einen Zulauf für die Edukte und mindestens einen Ablauf für die Produkte aufweisen, und dabei unabhängig voneinander betrieben oder genutzt werden können.

Das Wesen der Erfindung besteht darin, dass sie exemplarisch in einem miniaturisierten Bauteil eine Vielzahl von denkbaren Ausführungsformen von Mikroreaktoren in sich vereinigt. Unter Ausführungsform soll in diesem Zusammenhang vor allem die geometrische Anordnung der Mikroreaktionssysteme bzw. -reaktionsräume (vorzugsweise Kanäle) sowie deren geometrische Abmessungen verstanden werden, aber auch die Art und Weise und der geometrische Ort, mit der die Vermischung der Reaktionspartner erfolgt. Als weitere Variable kommt die Möglichkeit hinzu, die Reaktion zonenweise unterschiedlich zu kühlen oder zu heizen. Auf diese Weise lassen sich eine Vielzahl von Prozessparametern variieren, wie beispielsweise die Eduktkonzentration, das Stoffmengenverhältnis der Edukte zueinander, der Einsatz von Lösungsmitteln und anderen Hilfsstoffen, die Durchsatzmengen, die Verweilzeit, unterschiedliche Verweilzeit in einzelnen Zonen sowie die Reaktionstemperaturen in den einzelnen Zonen. Der neue Chip-Reaktor bietet somit die Möglichkeit, durch problemloses Ansteuern der einzelnen Mikroreaktionsräume eine Vielzahl von möglichen Ausführungsformen von Mikroreaktionssystemen im Hinblick auf ihre Eignung in Flüssigphasenreaktionen und die Optimierung der Versuchsergebnisse zu erproben, um auf diesem Wege eine Vielzahl von Experimenten wesentlich schneller und mit geringerem Aufwand durchzuführen .

### Chip-Reaktor

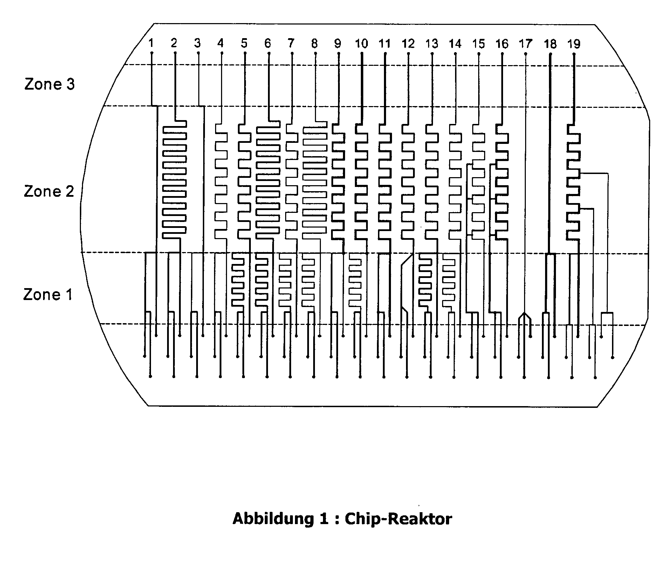

In einer beispielhaften Ausführungsform stellt der Chip-Reaktor einen Silizium-Glas-Verbund dar, in welchem die Struktur und Maße der Mikroreaktionssysteme vorgegeben sind. Alternative Materialkombinationen sind Silizium-Silizium, Glas-Glas, Metall-Metall, Metall-Kunststoff, Kunststoff-Kunststoff, oder Keramik-Keramik. Ein Beispiel für ein Layout mir 19 Kanalstrukturen ist in Abbildung 1 wiedergegeben, möglich sind jedoch Chips mit bis zu 100, vorzugsweise 5 bis 50 und insbesondere 10 bis 25 Kanälen. Die Strukturierung des beispielsweise 100 bis 2000, vorzugsweise etwa 400 µm starken Silizium-Wafers erfolgt dabei vorzugsweise mittels geeigneter Mikrostrukturierungs- bzw. Ätztechniken, z.B. dem reaktivem Ionen-Ätzen ("Reactive Ion Etching"), wodurch im Silizium dreidimensionale Strukturen unabhängig von der Kristallorientierung gefertigt werden können [vgl. James et al. in **Sci. Am. 4, 248 (1993)].** Die Strukturen zeichnen sich dabei durch Abmessungen von 50 bis 1500, vorzugsweise 10 bis 1000 µm und senkrechte Wände aus, wobei die Tiefe der Kanäle 20 bis 1800 und vorzugsweise etwa 200 bis 500 µm beträgt. Die Querschnitte eines Mikroreaktionsraumes, die sich im Sinne der Erfindung voneinander unterscheiden können, liegen in der Größenordnung von 20×20 bis 1500×1500 und insbesondere 100×100 bis 300×300 µm², wie dies beispielsweise auch von Burns et al. in **Trans IChemE 77(5), 206 (1999)** als typisch angegeben wird. Zur Versorgung der Mikroreaktionsräume mit Reaktanden wird der Silizium-Wafer an den dafür vorgesehenen Stellen durchgeätzt. Nach der Strukturierung des Silizium-Wafers hat es sich als in speziellen Ausführungsformen als vorteilhaft erwiesen, auf der Oberfläche der Reaktionsräume bzw. Kanäle eine geschlossene SiO₂-Schicht zu erzeugen, welche vorzugsweise eine Stärke von 50 bis 2000, vorzugsweise 100 bis 100 und insbesondere von etwa 200 bis 400 nm aufweisen sollte. Auf diese Weise wird gewährleistet, dass es nicht zu Wechselwirkungen der Edukte oder Produkte mit der Si-Oberfläche und damit zu unerwünschten Neben- oder gar Zersetzungsreaktionen kommt, die ansonsten vielfach beobachtet werden. Die thermische Beschichtung eines Si-Wafers mit SiO₂ erfolgt durch Erhitzen des Wafers in sauerstoffhaltiger Atmosphäre auf ca. 1000°. Damit kommt es zu einer Reaktion zwischen Silizium und Sauerstoff unter Ausbildung einer Oxidschicht auf der gesamten exponierten Oberfläche, also insbesondere auch in den Kanal-Mikrostrukturen. Je nach Dauer dieser thermischen Behandlung kann die Schichtdicke des SiO₂ eingestellt werden. Bei der Oxidation handelt es sich um einen Wurzelprozess, d.h. die SiO₂-Schicht wächst quasi in den Wafer hinein, und kommt bei einer bestimmten Tiefe zum Stillstand, da an der Oberfläche kein Silizium mehr zur Oxidation zur Verfügung steht. Das Verfahren ist geeignet, sehr dichte und exzellent haftende, weil stofflich mit dem Silizium verbundene SiO₂-Schichten zu erzeugen. Außerdem bleibt der Wafer dabei bondbar, d.h. er kann weiterhin mit anderen Wafern, z.B. aus Glas oder Si verbunden werden. Generell sind auch andere Verfahren zur Beschichtung geeignet, z.B. PVD-Verfahren (Physical Vapor Deposition), solange das Material dabei bondbar bleibt. Zum Abschluss wird der strukturierte und durch Beschichtung inertisierte Silizium-Wafer schließlich durch ein geeignetes Verfahren, z.B. anodisches Bonden, mit einem weiteren Wafer, z.B. aus Glas, vorzugsweise Pyrex-Glas, verbunden und die einzelnen Strömungskanäle dicht zueinander verschlossen.

In einer bevorzugten Ausführungsform der Erfindung gliedert sich der Chip-Reaktor in eine oder mehrere Mischzonen, eine oder mehrere Reaktionszonen, eine oder mehrere Mischund Reaktionszonen, eine oder mehrere Kühlzonen oder beliebige Kombinationen davon. Vorzugsweise weist der Chip-Reaktor drei Zonen, nämlich zwei Reaktions- und eine Kühlzone auf, wodurch in diesem Fall eine zweistufige Reaktion in flüssiger Phase effizient untersucht werden kann. In der ersten Zone erfolgt dabei die Vermischung zweier Reaktionsteilnehmer sowie deren Reaktion, in der zweiten findet die Reaktion zwischen dem Produkt der ersten Zone und einem weiteren Edukt statt, während in der dritten der Abbruch der Reaktion durch Absenken der Temperatur bewirkt wird. Dabei ist es nicht zwingend erforderlich, die erste und die zweite Reaktionszone thermisch streng voneinander zu trennen. Wenn nämlich die Zugabe eines weiteren Reaktionspartners erforderlich ist oder anstelle eines Mischungspunktes mehrere gewünscht werden, kann dies über die Zone 1 hinaus auch noch in der Reaktionszone 2 stattfinden. Beispiele hierfür finden sich in den Kanälen 16 und 19 gemäß Abbildung 1. Die Mikroreaktionssysteme können dabei sequentiell oder aber gleichzeitig, d.h. parallel mit jeweils definierten Eduktmengen betrieben werden.

Eine weitere Möglichkeit, wie sich die Mikroreaktionssysteme in ihrer Geometrie unterscheiden können, besteht im Mischungswinkel, unter dem die Edukte aufeinander treffen und der zwischen 15 und 270° und vorzugsweise 45 bis 180° liegen kann. Des weiteren ist es möglich, jede der drei Zonen unabhängig voneinander zu kühlen oder zu heizen bzw. die Temperatur innerhalb einer Zone beliebig zu variieren, wobei die Reaktionsräume in diesem Beispiel Kanäle darstellen, deren Länge pro Zone 10 bis 500 mm betragen kann. In Tabelle 1 sind die Geometrien der Kanalsysteme gemäß Abbildung 1 näher erläutert:

**Tabelle 1**

| **Charakterisierung der Kanalsysteme gemäß Abbildung 1** | | | | | | |
|---|---|---|---|---|---|---|
| **Kanal** | **Zone 1** | | | **Zone 2** | | |
| | Kanallänge mm | Kanalbreite µm | Mischwinkel Grad | Kanallänge mm | Kanalbreite µm | Mischwinkel Grad |
| 1 | 10 | 75 | 90 | 25 | 75 | 90 |
| 2 | 10 | 75 | 90 | 100 | 75 | 90 |
| 3 | 10 | 150 | 90 | 25 | 150 | 90 |
| 4 | 10 | 150 | 90 | 50 | 10 | 90 |
| 5 | 30 | 75 | 90 | 50 | 75 | 90 |
| 6 | 30 | 75 | 90 | 100 | 75 | 90 |
| 7 | 30 | 150 | 90 | 50 | 150 | 90 |
| 8 | 30 | 150 | 90 | 100 | 150 | 90 |
| 9 | 10 | 150 | 90 | 50 | 300 | 90 |
| 10 | 30 | 150 | 90 | 50 | 300 | 90 |
| 11 | 10 | 300 | 90 | 50 | 300 | 90 |
| 12 | 10 | 75 | 45 | 50 | 75 | 45 |
| 13 | 30 | 75 | 180 | 50 | 75 | 180 |
| 14 | 30 | 150 | 180 | 50 | 150 | 180 |
| 15^{a)} | 10-25 | 150 | 90 | 50 | 150 | 90 |
| 16 ^{a)} | 10-25 | 300 | 90 | 50 | 300 | 90 |
| 17 ^{b)} | | | | 35 | 150 | 45 |
| 18 | 10 | 300 | 180 | 25 | 300 | 180 |
| 19 ^{c)} | 10/20/30 | 3 x 150 | 3 X 180 | 50 | 300 | 90 |

| | | | | | | |
|---|---|---|---|---|---|---|
| a) dreistufige Zugabe | | | | | | |
| b) gemeinsamer Mischungspunkt für drei Edukte | | | | | | |
| c) drei unabhängige Systeme | | | | | | |

### Sandwich-Bauweise

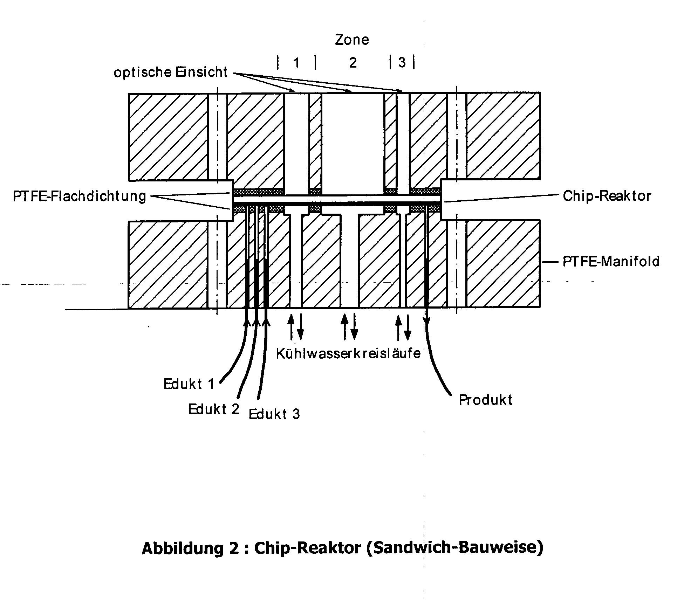

Die Komplettierung des Chips zum fertigen Chip-Reaktor erfolgt in einer besonderen Ausfürhungsform in Sandwich-Bauweise, wie sie in Abbildung 2 wiedergegeben ist. Der Chip ist dabei eingebettet in einem Manifold aus einem geeigneten vorzugsweise inerten Material, z.B. PTFE, welches an der Unterseite für jedes Mikroreaktionssystem die Zuläufe für die Edukte, Abläufe für die Produkte und an der Oberseite Möglichkeiten zur optischen Einsicht und damit zum online-Reaktionsmonitoring durch den Glas-Wafer hindurch auf die unterschiedlichen Zonen besitzt. Der Chip wird dabei von beiden Seiten mit einer Flachdichtung, beispielsweise aus dem Material Gore-tex® GR10 belegt. Das Manifold für die Edukt-Zuführungen und Produkt-Abführungen enthält dabei zusätzlich noch Kanäle für die Führung von Wärmeträger-Flüssigkeiten. Der Wärmeübergang erfolgt dabei so, dass der Wärmeträger auf der Rückseite des Silizium-Wafers über den Chip-Reaktor fließt und damit die in den Reaktionskanälen entstehende oder erforderliche Reaktionswärme effektiv überträgt. Jede Zone des Wafers kann dabei mit einem anderen Wärmeträger beaufschlagt werden. Die Regulierung der Temperatur kann dabei grundsätzlich auch auf jedem anderen Wege, beispielsweise durch elektrische Beheizung erzielt werden. Die Temperaturen in den einzelnen Zonen können unabhängig voneinander eingestellt werden. Der Anschluss der Wärmeträger an das Manifold des Reaktors erfolgt dabei z.B. mit Schlauchanschlüssen. Der Chip-Reaktor besitzt eine typische Abmessung von 50 x 50 bis 150 x 150 mm. Die Realisierung der Fluidanschlüsse an den Chip-Reaktor kann auch auf andere Art und Weise erfolgen. Beispielsweise seien hier Presssitze von entsprechenden Fluidzuführungen an den Wafer (vorgestellt von Schwesinger, 4^{th} International Conference on Microreaction Technology, Atlanta/GA, 5-9 März 2000) oder auch Klebverbindungen, unter Umständen mit Hilfe kleiner Stutzen, genannt.

## Patentansprüche

1. Chip-Reaktor, bestehend aus einem Träger mit mindestens zwei in ihrer Ausführungsform unterschiedlichen Mikroreaktionssystemen ("Kanälen"), die jeweils mindestens einem Mikroreaktionsraum, mindestens einen Zulauf für die Edukte und mindestens einen Ablauf für die Produkte aufweisen, und dabei unabhängig voneinander betrieben oder genutzt werden können.

2. Chip-Reaktor nach Anspruch 1, **dadurch gekennzeichnet, dass** der Träger ein Silizium-Glas-Verbund darstellt, in welchen die Reaktionsräume durch geeignete Mikrostrukturierungstechniken eingebracht werden.

3. Chip-Reaktor nach den Ansprüchen 1 und/oder 2, **dadurch gekennzeichnet, dass** der Träger aus einem Silizium-Glas-Verbund mit Reaktionsräumen besteht, deren Wände mit Siliziumdioxid beschichtet worden sind.

4. Chip-Reaktor nach Anspruch 3, **dadurch gekennzeichnet, dass** die Siliziumdioxidschicht geschlossen und 50 bis 2000 nm dick ist.

5. Chip-Reaktor nach mindestens einem der Ansprüche 1 bis 4, **dadurch gekennzeichnet, dass** der Träger 2 bis 100 Mikroreaktionssysteme aufweist.

6. Chip-Reaktor nach mindestens einem der Ansprüche 1 bis 5, **dadurch gekennzeichnet, dass** die Reaktionsräume Abmessungen im Bereich von 50 bis 1500 µm aufweisen.

7. Chip-Reaktor nach mindestens einem der Ansprüche 1 bis 6, **dadurch gekennzeichnet, dass** die Reaktionsräume eine Tiefe von 20 bis 1800 µm aufweisen.

8. Chip-Reaktor nach mindestens einem der Ansprüche 1 bis 7, **dadurch gekennzeichnet, dass** die Reaktionsräume Querschnitte von 20x20 bis 1500x1500 µm² aufweisen.

9. Chip-Reaktor nach mindestens einem der Ansprüche 1 bis 8, **dadurch gekennzeichnet, dass** die Zuläufe für die Edukte in einem Mischungswinkel von 15 bis 270° aufeinander treffen.

10. Chip-Reaktor nach mindestens einem der Ansprüche 1 bis 9, **dadurch gekennzeichnet, dass** die Reaktionsräume einen oder mehrere Mischungspunkte aufweisen.

11. Chip-Reaktor nach mindestens einem der Ansprüche 1 bis 10, **dadurch gekennzeichnet, dass** die Reaktionsräume Kanäle darstellen und eine Länge von 1 bis 500 mm aufweisen.

12. Chip-Reaktor nach mindestens einem der Ansprüche 1 bis 11, **dadurch gekennzeichnet, dass** sich die Reaktionsräume in eine oder mehrere Mischzonen, eine oder mehrere Reaktionszonen, eine oder mehrere Misch- und Reaktionszonen, eine oder mehrere Kühlzonen oder beliebige Kombinationen davon gliedern.

13. Chip-Reaktor nach Anspruch 12, **dadurch gekennzeichnet, dass** man jede der Zonen unabhängig von einander kühlen oder beheizen kann.

14. Chip-Reaktor nach mindestens einem der Ansprüche 1 bis 13, **dadurch gekennzeichnet, dass** die Reaktionsräume Kanäle darstellen und pro Zone eine Länge von 1 bis 500 mm aufweisen.

15. Chip-Reaktor nach mindestens einem der Ansprüche 1 bis 14, **dadurch gekennzeichnet, dass** man die darin enthaltenen Mikroreaktionssysteme sequentiell oder parallel betreibt.

16. Chip-Reaktor nach mindestens einem der Ansprüche 1 bis 15, **dadurch gekennzeichnet, dass** sich der Chip eingebettet in einem Manifold aus einem geeigneten Material befindet, welches an der Unterseite für jeden Kanal Zuläufe für die Edukte, Abläufe für die Produkte sowie Zu- und Abläufe für Kühlwasser oder Wärmeträgerflüssigkeit und gegebenenfalls an der Oberseite Möglichkeiten zur optischen Einsicht und damit zum online-Reaktionsmonitoring auf die unterschiedlichen Zonen besitzt.

17. Chip-Reaktor nach Anspruch 16, **dadurch gekennzeichnet,** das der Chip zum Manifold durch Flachdichtungen abgedichtet ist.

18. Chip-Reaktor nach mindestens einem der Ansprüche 1 bis 17, **dadurch gekennzeichnet, dass** der Reaktor eine Abmessung von 50 x 50 bis 150 x 150 mm aufweist.
